# EUROPÄISCHE PATENTANMELDUNG

(11) **EP 2 741 000 A2**
(43) Veröffentlichungstag der Anmeldung: **11.06.2014**
(21) Anmeldenummer: 13194295.5
(22) Anmeldetag: 25.11.2013
(51) Int. Cl.: F23G 7/10, F23G 5/46, F23B 80/00

(54) **Heizkessel mit Wärmekraftmaschine**

(30) Priorität: 04.12.2012 AT 12692012
(71) Anmelder: Ökofen Forschungs- und Entwicklungsges. M.B.H., 4133 Niederkappel (AT)
(72) Erfinder: Ortner, Herbert, 4132 Lembach (AT)
(74) Vertreter: KLIMENT & HENHAPEL

(57) **Zusammenfassung**

Die Erfindung bezieht auf eine Heizeinrichtung (1), insbesondere Heizkessel, mit einem Brennraum (2) zur Verbrennung von festem Brennstoff, insbesondere Biomasse, sowie einem Flammrohr (4), dessen Einströmbereich dem Brennraum (2) zugewandt ist und dessen Ausströmbereich einem anschließenden Rauchgaskanal (3) zur Abfuhr von Rauchgasen zugewandt ist" wobei eine Wärmekraftmaschine (5) zur Umwandlung von Wärmeenergie in mechanische Energie mit einem thermisch an den Hochtemperaturbereich der Wärmekraftmaschine (5) gekoppelten Wärmeüberträger (6) vorgesehen ist. Erfindungsgemäß wird vorgeschlagen, dass der Wärmeüberträger (6) im Ausströmbereich des Flammrohres (4) angeordnet ist und eine Anströmfläche (7) für die Rauchgase aufweist, die durch einen, sich in Richtung des Einströmbereiches verjüngenden Abschnitt (8) des Wärmeüberträgers (6) gebildet wird. Auf diese Weise wird eine Heizeinrichtung ermöglicht, mit der zusätzlich zur Erwärmung eines Mediums zur Nutzung als Warmwasser oder zu Heizzwecken mithilfe der Verbrennungswärme fester Brennstoffe auch eine Wärmekraftmaschine betrieben werden kann.

## Beschreibung

Die Erfindung bezieht sich auf eine Heizeinrichtung, insbesondere Heizkessel, mit einem Brennraum zur Verbrennung von festem Brennstoff, insbesondere Biomasse, sowie einem Flammrohr, dessen Einströmbereich dem Brennraum zugewandt ist und dessen Ausströmbereich mit einem anschließenden Rauchgaskanal zur Abfuhr von Rauchgasen verbunden ist, wobei eine Wärmekraftmaschine zur Umwandlung von Wärmeenergie in mechanische Energie mit einem thermisch an den Hochtemperaturbereich der Wärmekraftmaschine gekoppelten Wärmeüberträger vorgesehen ist, gemäß dem Oberbegriff von Anspruch 1.

Derartige Heizeinrichtungen dienen der Erwärmung eines Mediums zur Nutzung als Warmwasser oder zu Heizzwecken mithilfe der Verbrennung eines festen Brennstoffes. Bei gasbetriebenen Heizeinrichtungen ist es bekannt, mithilfe einer zusätzlich angeordneten Wärmekraftmaschine, etwa einem Stirlingmotor, auch eine Umwandlung von Wärme in Bewegungsenergie vorzunehmen. In einer Wärmekraftmaschine wird ein abgeschlossenes Arbeitsgas wie Luft, Helium oder Wasserstoff von außen in einem ersten Bereich, dem so genannten Hochtemperaturbereich, erhitzt, und in einem zweiten Bereich gekühlt. Das Arbeitsgas dehnt sich dabei im erwärmten Zylinderraum aus und zieht sich im kalten Zylinder wieder zusammen, wobei nutzbare mechanische Arbeit entsteht. Die Bewegungsenergie kann in weiterer Folge durch einen elektrischen Generator in elektrische Energie umgewandelt werden.

Der Einsatz von Stirlingmotoren im Zusammenhang mit gasbetriebenen Heizkesseln ist zwar an sich bekannt, zufriedenstellende Lösungen für die Verbrennung von festem Brennmaterial gibt es bislang jedoch nicht. Hinsichtlich der Übertragung von Verbrennungswärme auf den Hochtemperaturbereich kommerziell erhältlicher Stirlingmotoren ergeben sich bei der Verbrennung von festen Brennstoffen, insbesondere Biomasse, nämlich bislang ungelöste Probleme, und zwar nicht nur wegen der unterschiedlichen Temperatur der Rauchgase, sondern insbesondere auch wegen der im Rauchgas enthaltenen Verbrennungspartikel, die im Laufe der Zeit Ablagerungen an allen angeströmten Komponenten verursachen. Die abgelagerten Partikel verhindern einen effizienten Wärmetransfer zum Hochtemperaturbereich der Wärmekraftmaschine. Es wird vermutet, dass die im Rauchgas enthaltenen Partikel eine thermisch isolierende Schicht sowohl innerhalb der Strömung, als auch in Form der erwähnten Ablagerungen bilden. Bei bislang bekannten Systemen, die für gasförmige Brennstoffe optimiert wurden, stellen Verbrennungspartikel kein Problem dar. Eine Anwendung dieser Systeme auf feste Brennstoffe führt jedoch zu einem unbefriedigenden Ergebnis.

Das Ziel der vorliegenden Erfindung besteht somit darin eine Heizeinrichtung bereitzustellen, mit der zusätzlich zur Erwärmung eines Mediums zur Nutzung als Warmwasser oder zu Heizzwecken mithilfe der Verbrennungswärme fester Brennstoffe auch eine Wärmekraftmaschine betrieben werden kann. Insbesondere soll hierbei eine effiziente und praxistaugliche Übertragung der Verbrennungswärme fester Brennstoffe auf den Hochtemperaturteil einer Wärmekraftmaschine, etwa den Erhitzerkopf eines Stirlingmotors, möglich sein. Die Ablagerung von Verbrennungspartikeln an angeströmten Flächen, insbesondere an jenen Komponenten, die der Wärmeübertragung dienen, soll dabei vermindert werden. Dies soll zu einer effizienteren Nutzung der Verbrennungswärme für die Umwandlung in mechanische Energie führen.

Dieses Ziel wird mithilfe der Merkmale von Anspruch 1 erreicht. Anspruch 1 bezieht sich dabei auf eine Heizeinrichtung, insbesondere einen Heizkessel, mit einem Brennraum zur Verbrennung von festem Brennstoff, insbesondere Biomasse, sowie einem Flammrohr, dessen Einströmbereich dem Brennraum zugewandt ist und dessen Ausströmbereich mit einem anschließenden Rauchgaskanal zur Abfuhr von Rauchgasen verbunden ist, wobei eine Wärmekraftmaschine zur Umwandlung von Wärmeenergie in mechanische Energie mit einem thermisch an den Hochtemperaturbereich der Wärmekraftmaschine gekoppelten Wärmeüberträger vorgesehen ist. Erfindungsgemäß wird hierbei vorgeschlagen, dass der Wärmeüberträger im Ausströmbereich des Flammrohres angeordnet ist und eine Anströmfläche für die Rauchgase aufweist, die durch einen, sich in Richtung des Einströmbereiches verjüngenden Abschnitt des Wärmeüberträgers gebildet wird.

Im Ausströmbereich des Flammrohres, der durch den inneren und äußeren Nahbereich der Austrittsöffnung des Flammrohres gebildet wird, besteht in der Regel eine weitestgehend laminare Strömung der Rauchgase. Der Ausströmbereich des Flammrohres versteht sich in weiterer Folge auch so, dass es jener innere und äußere Nahbereich des Flammrohres ist, in dem eine weitestgehend laminare Strömung der Rauchgase vorherrscht. Durch den sich in Richtung des Einströmbereiches verjüngenden Abschnitt des Wärmeüberträgers wird eine annähernd laminare Strömung der Rauchgase beibehalten, sodass Turbulenzen, die eine Verschlechterung des Wärmetransfers bewirken würden, vermieden werden können. Die erfindungsgemäße Lösung stellt dabei einerseits sicher, dass die Rauchgase entlang der Anströmfläche eine ausreichende Kontaktfläche vorfinden, um die Wärme effizient zu übertragen, und gewährleistet andererseits, dass durch Einstellung einer nahezu laminaren Strömung und einer geeigneten Strömungsgeschwindigkeit die Neigung zur Partikelablagerung stark reduziert ist, wie noch näher ausgeführt werden wird. Beides führt zu einer effektiven Wärmeübertragung auf den Hochtemperaturbereich der Wärmekraftmaschine.

Vorzugsweise ist der die Anströmfläche bildende Abschnitt des Wärmeüberträgers konisch ausgeführt und koaxial zum Flammrohr angeordnet. Des Weiteren könnte die Anströmfläche auch kuppelförmig, etwa als Halbkugel oder als eine, in einer Spitze mündende Kuppel ausgeführt sein. Für diese Ausführungen wird außerdem vorgeschlagen, dass die Höhe der Anströmfläche in axialer Richtung zumindest die Hälfte des maximalen Durchmessers der Anströmfläche beträgt. Alle genannten Maßnahmen begünstigen die Ausbildung und/oder Beibehaltung einer laminaren Strömung der Rauchgase.

Des Weiteren wird vorgeschlagen, dass der Wärmeüberträger einen zylindrisch ausgeführten Sockelabschnitt aufweist, der sich in der, dem Flammrohr abgewandten Richtung an den die Anströmfläche bildenden Abschnitt anschließt. Durch einen derartigen Sockelbereich kann die Anordnung der Anströmfläche relativ zur Wärmekraftmaschine und zum Flammrohr variiert werden, insbesondere kann die Anströmfläche näher am Flammrohr platziert werden, sodass die Anströmfläche in den Innenbereich des Flammrohres ragt.

Der Sockelbereich ist dabei ebenso wie der Wärmeüberträger aus einem thermisch gut leitenden Material gefertigt. Insbesondere wird vorgeschlagen, dass der Wärmeüberträger aus zumindest einem Metallblock, vorzugsweise einem Kupferblock, gebildet wird. Die hervorragende thermische Leitfähigkeit dieser Materialien sorgt für einen hohen Wärmedurchsatz in Richtung der Wärmekraftmaschine.

Gemäß einer bevorzugten Ausführungsvariante wird des Weiteren vorgeschlagen, dass im Ausströmbereich des Flammrohres eine rohrförmige Anströmeinheit angeordnet ist, die die Anströmfläche umgibt und deren Innenfläche von der Anströmfläche geringfügig beabstandet ist. Zwischen der Anströmeinheit und der Anströmfläche stellt sich somit ein Ringspalt ein, durch den die Rauchgase mithilfe einer Ansaugung, die etwa stromabwärts im Rauchgaskanal angeordnet ist, geführt werden. Über eine Variation der Ringspaltbreite kann dabei die Strömungsgeschwindigkeit der Rauchgase eingestellt werden. Je enger der Ringspalt, also die Beabstandung der Anströmeinheit von der Anströmfläche, gewählt wird, desto höher ist die Strömungsgeschwindigkeit der Rauchgase und desto besser ist auch der Wärmeübertrag auf die Anströmfläche. Allerdings steigt auch der Staudruck der Anströmeinheit, sodass der Ringspalt nicht zu eng gewählt werden darf. Die Erhöhung der Strömungsgeschwindigkeit mithilfe der Anströmeinheit bewirkt jedoch auch eine gute Mitnahme der im Rauchgas enthaltenen Partikel, deren Ablagerung an der Anströmfläche somit erschwert wird. Hinsichtlich der apparativen Auslegung der Anströmfläche wird insbesondere vorgeschlagen, dass der maximale Querschnitt des die Anströmfläche bildenden Abschnitts des Wärmeüberträgers zumindest so groß ist wie der lichte Querschnitt des Flammrohres in seinem Ausströmbereich. Dies sorgt für eine ausreichende Umlenkung und Kontaktzeit der Rauchgase mit der Anströmfläche, und somit für einen guten Wärmeübergang.

Des Weiteren ist der Ausströmbereich vorzugsweise durch eine Platte begrenzt, wobei der Wärmeüberträger in einem Durchbruch der Platte angeordnet ist, und die Wärmekraftmaschine auf der, dem Flammrohr abgewandten Seite der Platte angeordnet ist. Die Platte ist dabei als thermisch isolierende Platte ausgebildet, wobei der Wärmeüberträger eine thermische Brücke zum Hochtemperaturbereich der Wärmekraftmaschine bildet.

Im Umfangsbereich der Anströmfläche sind vorzugsweise Reinigungsdüsen vorgesehen, die auf die Anströmfläche gerichtet sind und über die ein Reinigungsfluid (z.B. Druckluft) eingebracht wird, um Partikelablagerungen zu entfernen. Falls eine Anströmeinheit angeordnet ist, sind die Reinigungsdüsen auf den Bereich zwischen der Innenfläche der Anströmeinheit und der Anströmfläche gerichtet. Die Reinigungsdüsen erlauben eine einfache Reinigung des Wärmeüberträgers bzw. der Innenfläche der Anströmeinheit und können etwa als ein, zur Austrittsöffnung der rohrförmigen Anströmeinheit konzentrisch angeordneter Verteilring ausgeführt sein, der etwa an der den Ausströmbereich begrenzenden Platte befestigt ist.

Vorzugsweise ist die Heizeinrichtung auf die Verbrennung von rieselfähigem Brenngut ausgelegt, vorzugsweise als Pelletskessel bzw. Pelletsofen, und kann in Form eines Heizkessels, als Teil einer Heizungsanlage, Zentralheizung und/oder Pufferspeicher ausgebildet sein.

Bei der Wärmekraftmaschine handelt es sich vorzugsweise um einen Stirlingmotor.

Im Folgenden werden bevorzugte Ausführungsformen der Erfindung anhand der beiliegenden Zeichnungen näher beschrieben. Dabei zeigen die
Fig. 1 einen erfindungsgemäßen Heizkessel,
Fig. 2 eine vergrößerte Darstellung des Flammrohres, der Anströmeinheit und der Anströmfläche des Wärmeüberträgers gemäß der Ausführungsform von Fig. 1,
Fig. 3a eine weitere Ausführungsform der Erfindung mit halbkugelförmiger Anströmfläche,
Fig. 3b eine vergrößerte Darstellung des Flammrohres, der Anströmeinheit und der Anströmfläche des Wärmeüberträgers gemäß der Ausführungsform von Fig. 3a,
Fig. 4a eine weitere Ausführungsform der Erfindung mit kuppelförmiger Anströmfläche, und die
Fig. 4b eine vergrößerte Darstellung des Flammrohres, der Anströmeinheit und der Anströmfläche des Wärmeüberträgers gemäß der Ausführungsform von Fig. 4a.

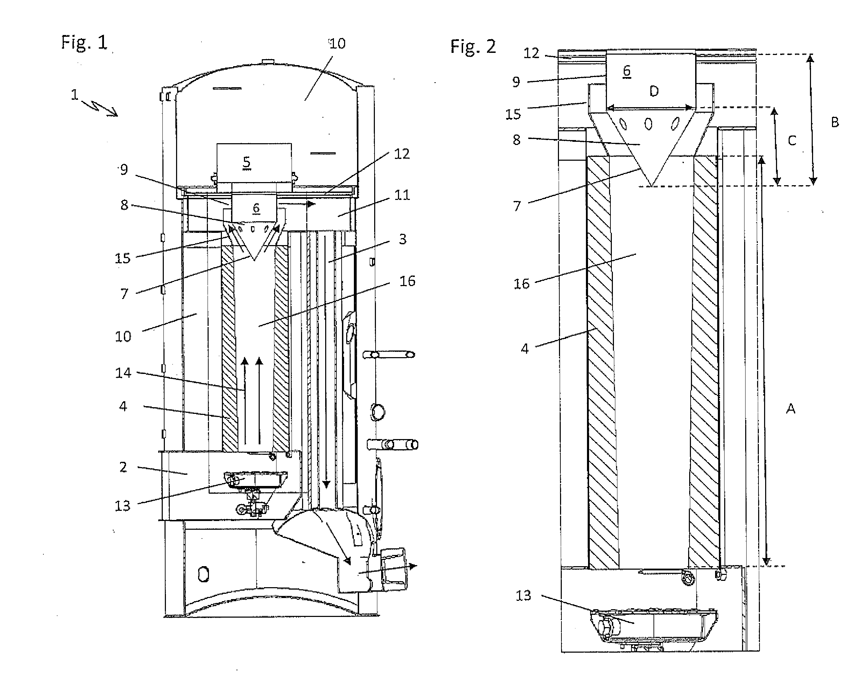

Fig. 1 zeigt eine erfindungsgemäße Heizeinrichtung 1 in Form eines Heizkessels zur Erwärmung eines Mediums durch Verbrennung von festem Brennstoff, insbesondere Biomasse. In einem Brennraum 2 ist hierfür ein Brennteller 13 angeordnet, dem das feste Brenngut etwa in Form von riesel- bzw. schüttfähigem Brenngut (z.B. Pellets) während des Verbrennungsvorganges zugeführt wird. Unterhalb des Brenntellers 13 sammelt sich die Asche und wird von einer Ascheschnecke in den Aschebehälter befördert. Wie in Fig. 1 angedeutet besitzt der Brennraum 2 eine seitlich Öffnung, über die schüttfähiges Brenngut mittels einer (nicht dargestellten) Fördereinrichtung zum Brennteller 13 gefördert werden kann. Die Fördereinrichtung kann etwa eine automatisch gesteuerte Förderschnecke sein.

Oberhalb des Brenntellers 13 ist ein Flammrohr 4 vertikal angeordnet, dessen Einströmbereich dem Brennraum 2 zugewandt ist und in den Brennraum 2 mündet. Das Flammrohr 4 ist von entsprechender Dicke und aus einem thermisch isolierenden Material, vorzugsweise keramisches Material oder (Feuer)Beton, gefertigt. Am oberen Ende des Flammrohres 4 treten die Rauchgase in einem Ausströmbereich des Flammrohres 4 in annähernd laminarer Strömung aus und gelangen über eine Kammer 11 in einen anschließenden Rauchgaskanal 3, über den sie aus der Heizeinrichtung 1 abgeführt werden. Die Wärmekraftmaschine 5 und Abschnitte des Rauchgaskanals 3 sind von flüssigkeitsgefüllten, insbesondere wassergefüllten Räumen 10 umgeben. In diesen Räumen 10 befindet sich das für Heizzwecke oder zur Nutzung als Warmwasser zu erwärmende Medium.

Im Ausströmbereich des Flammrohres 4 ist ein Wärmeüberträger 6 angeordnet, der thermisch an den Hochtemperaturbereich der Wärmekraftmaschine 5, vorzugsweise ein Stirlingmotor, gekoppelt ist. Der Wärmeüberträger 6 weist eine Anströmfläche 7 für das Rauchgas auf, die auf das Flammrohr 4 gerichtet ist und durch einen sich in Richtung des Einströmbereiches des Flammrohres 4, also gegen die Strömungsrichtung 14 des Rauchgases verjüngenden Abschnitt 8 des Wärmeüberträgers 6 gebildet wird. In der dargestellten Ausführungsform gemäß Fig. 1 ist dieser Abschnitt 8 konisch ausgebildet und ragt in den Innenbereich 16 des Flammrohres 4.

Der Wärmeüberträger 6 weist einen vorzugsweise zylindrisch ausgeführten Sockelabschnitt 9 auf, der sich in der, dem Flammrohr 4 abgewandten Richtung an den die Anströmfläche 7 bildenden Abschnitt 8 anschließt. Der Wärmeüberträger 6 ist etwa aus einem massiven Metallblock, vorzugsweise einem Kupferblock, gebildet. In einer besonderen Ausführungsform ist der zylindrische Sockelabschnitt 9 aus einem Metallblock und der untere, konische Abschnitt 8 aus einem gesonderten Metallblock gebildet. Über Befestigungsmittel ist der konische Abschnitt 8 mit dem Sockelabschnitt 9 verbunden. Diese Ausführungsform ist insbesondere dann vorteilhaft, wenn ein zylindrischer Sockelabschnitt 9 bereits serienmäßig am Stirlingmotor integriert ist.

Im Ausströmbereich des Flammrohres 4 ist ferner eine rohrförmige Anströmeinheit 15 angeordnet, die die Anströmfläche 7 umgibt, und deren Innenfläche von der Anströmfläche 7 geringfügig beabstandet ist. Da im gezeigten Ausführungsbeispiel gemäß Fig. 1 die Anströmfläche 7 konisch ausgeführt ist, weist die Anströmeinheit 15 einen kegelstumpfförmigen Unterteil auf, der die Anströmfläche 7 in ihrem Umfangsbereich umgibt, sowie einen zylindrischen Oberteil, der den zylindrischen Sockelabschnitt 9 in seinem Umfangsbereich umgibt. Zwischen der Innenfläche der Anströmeinheit 15 und der Anströmfläche 7 stellt sich somit ein Ringspalt ein, durch den die Rauchgase strömen müssen, um in die Kammer 11 zu gelangen.

Die Kammer 11 wird in ihrem oberen Bereich, also in axialer Verlängerung des Flammrohres 4, durch eine Platte 12 begrenzt, die somit auch den Ausströmbereich des Flammrohres 4 begrenzt. Der Wärmeüberträger 6 ist in einem Durchbruch der Platte 12 angeordnet, und die Wärmekraftmaschine 5 auf der, dem Flammrohr 4 abgewandten Seite der Platte 12. Die Platte 12 ist aus einem thermisch resistenten Material gefertigt und dient auch als Träger für optionale Reinigungsdüsen (in den Fig. 1-4 nicht dargestellt), oder für Kühlungseinrichtungen. Die Reinigungsdüsen können etwa mit Druckluft beaufschlagt werden und dienen einer regelmäßigen Reinigung der Anströmfläche 7, indem sie etwa in den Ringspalt zwischen der Anströmeinheit 15 und der Anströmfläche 7 gerichtet sind.

Fig. 2 zeigt eine vergrößerte Darstellung des Flammrohres 4, der Anströmeinheit 15 und des Wärmeüberträgers 6, wobei relative Abmessungen erläutert werden sollen. In bevorzugter Ausführung beträgt die Höhe C der Anströmfläche 7 in axialer Richtung, also die axiale Erstreckung der Anströmfläche 7, zumindest die Hälfte des maximalen Durchmessers D der Anströmfläche 7, sodass die Rauchgase unter einem ausreichend flachen Winkel auf die Anströmfläche 7 treffen. Die Fig. 2 zeigt des Weiteren, dass die Länge A des Flammrohres 4 deutlich größer ist, als die Gesamthöhe B des Wärmeüberträgers 6, etwa zumindest dreimal so groß, sodass die relative Anordnung von Flammrohr 4 und Wärmeüberträger 6 eine annähernd laminare Strömung der Rauchgase sicher stellt. Um jedoch eine ausreichende Umlenkung und Kontaktzeit der Rauchgase mit der Anströmfläche 7 und somit einen guten Wärmeübergang zu erreichen, ist der maximale Durchmesser D des die Anströmfläche 7 bildenden Abschnitts 8 des Wärmeüberträgers 6 zumindest so groß wie der Durchmesser des Flammrohres 4 in seinem Ausströmbereich.

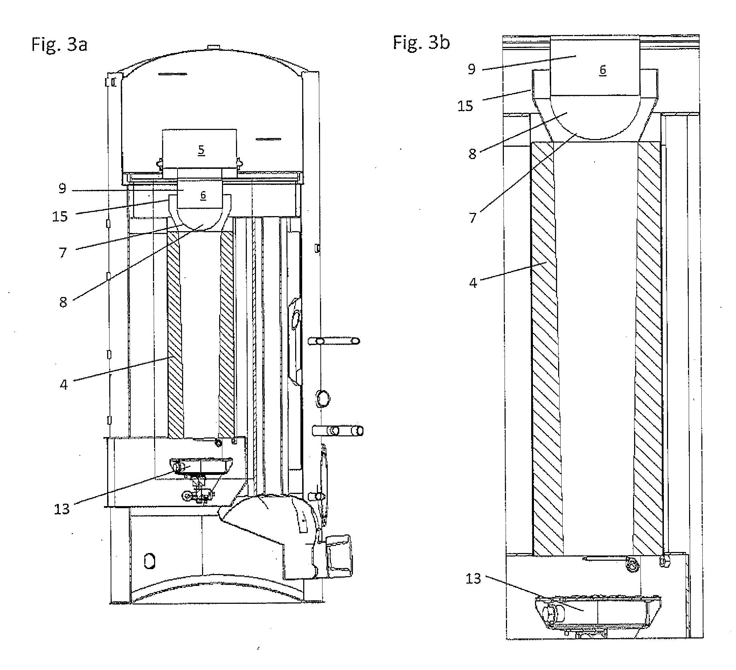

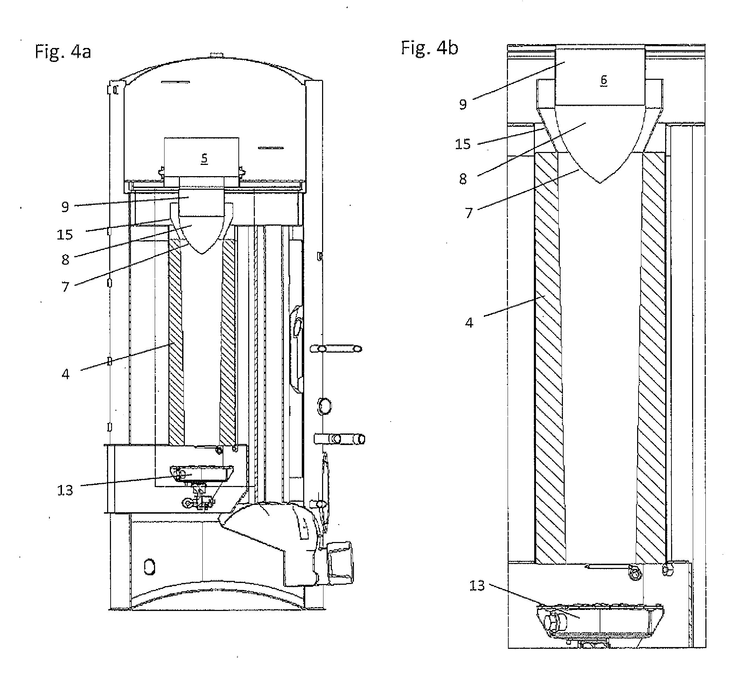

Die Fig. 3a und 3b zeigen eine weitere Ausführungsform der Erfindung mit halbkugelförmiger Anströmfläche 7, und die Fig. 4a und 4b eine weitere Ausführungsform der Erfindung mit kuppelförmiger Anströmfläche 7. Bei diesen beiden Ausführungsformen ändert sich der Anströmwinkel der Rauchgase entlang des Querschnittes der Anströmfläche 7.

Die Erfindung ist nicht auf die beschriebene Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

## Patentansprüche

1. Heizeinrichtung (1), insbesondere Heizkessel, mit einem Brennraum (2) zur Verbrennung von festem Brennstoff, insbesondere Biomasse, sowie einem Flammrohr (4), dessen Einströmbereich dem Brennraum (2) zugewandt ist und dessen Ausströmbereich einem anschließenden Rauchgaskanal (3) zur Abfuhr von Rauchgasen zugewandt ist, wobei eine Wärmekraftmaschine (5) zur Umwandlung von Wärmeenergie in mechanische Energie mit einem thermisch an den Hochtemperaturbereich der Wärmekraftmaschine (5) gekoppelten Wärmeüberträger (6) vorgesehen ist, **dadurch gekennzeichnet, dass** der Wärmeüberträger (6) im Ausströmbereich des Flammrohres (4) angeordnet ist und eine Anströmfläche (7) für die Rauchgase aufweist, die durch einen, sich in Richtung des Einströmbereiches verjüngenden Abschnitt (8) des Wärmeüberträgers (6) gebildet wird.

2. Heizeinrichtung nach Anspruch 1, **dadurch gekennzeichnet, dass** der die Anströmfläche (7) bildende Abschnitt (8) des Wärmeüberträgers (6) konisch ausgeführt und koaxial zum Flammrohr (4) angeordnet ist.

3. Heizeinrichtung nach Anspruch 1, **dadurch gekennzeichnet, dass** der die Anströmfläche (7) bildende Abschnitt (8) des Wärmeüberträgers (6) kuppelförmig ausgeführt und koaxial zum Flammrohr (4) angeordnet ist.

4. Heizeinrichtung nach Anspruch 2 oder 3, **dadurch gekennzeichnet, dass** die Höhe (C) der Anströmfläche (7) in axialer Richtung zumindest die Hälfte des maximalen Durchmessers (D) der Anströmfläche (7) beträgt.

5. Heizeinrichtung nach einem der vorhergehenden Ansprüche, **dadurch gekennzeichnet, dass** der Wärmeüberträger (6) einen zylindrisch ausgeführten Sockelabschnitt (9) aufweist, der sich in der, dem Flammrohr (4) abgewandten Richtung an den die Anströmfläche (7) bildenden Abschnitt (8) anschließt.

6. Heizeinrichtung nach einem der vorhergehenden Ansprüche, **dadurch gekennzeichnet, dass** die Anströmfläche (7) in den Innenbereich (16) des Flammrohres (4) ragt.

7. Heizeinrichtung nach einem der vorhergehenden Ansprüche, **dadurch gekennzeichnet, dass** der Wärmeüberträger (6) aus zumindest einem Metallblock, vorzugsweise einem Kupferblock, gebildet wird.

8. Heizeinrichtung nach einem der vorhergehenden Ansprüche, **dadurch gekennzeichnet, dass** im Ausströmbereich des Flammrohres (4) eine rohrförmige Anströmeinheit (15) angeordnet ist, die die Anströmfläche (7) umgibt und deren Innenfläche von der Anströmfläche (7) geringfügig beabstandet ist.

9. Heizeinrichtung nach einem der vorhergehenden Ansprüche, **dadurch gekennzeichnet, dass** der maximale Querschnitt des die Anströmfläche (7) bildenden Abschnitts (8) des Wärmeüberträgers (6) zumindest so groß ist wie der lichte Querschnitt des Flammrohres (4) in seinem Ausströmbereich.

10. Heizeinrichtung nach einem der vorhergehenden Ansprüche, **dadurch gekennzeichnet, dass** der Ausströmbereich durch eine Platte (12) begrenzt ist, wobei der Wärmeüberträger (6) in einem Durchbruch der Platte (12) angeordnet ist, und die Wärmekraftmaschine (5) auf der dem Flammrohr (4) abgewandten Seite der Platte (12) angeordnet ist.

11. Heizeinrichtung nach einem der vorhergehenden Ansprüche, **dadurch gekennzeichnet, dass** im Umfangsbereich der Anströmfläche (7) Reinigungsdüsen vorgesehen sind, die auf die Anströmfläche (7) gerichtet sind.

12. Heizeinrichtung nach Anspruch 8, **dadurch gekennzeichnet, dass** im Umfangsbereich der Anströmfläche (7) Reinigungsdüsen vorgesehen sind, die auf den Bereich zwischen der Innenfläche der Anströmeinheit (15) und der Anströmfläche (7) gerichtet sind.

13. Heizeinrichtung nach einem der vorhergehenden Ansprüche, **dadurch gekennzeichnet, dass** die Heizeinrichtung (1) für die Verbrennung von rieselfähigem Brenngut ausgelegt ist, vorzugsweise als Pelletskessel bzw. Pelletsofen.

14. Heizeinrichtung nach einem der vorhergehenden Ansprüche, **dadurch gekennzeichnet, dass** die Wärmekraftmaschine (5) ein Stirlingmotor ist.
